# EUROPEAN PATENT SPECIFICATION

(11) **EP 3 929 559 B1**
(45) Date of publication and mention of the grant of the patent: **31.07.2024**
(21) Application number: 21179951.5
(22) Date of filing: 17.06.2021
(51) Int. Cl.: G01N 1/30

(54) **METHOD AND KIT FOR THE PREPARATION OF CELLBLOCKS**
VERFAHREN UND KIT ZUR HERSTELLUNG VON ZELLBLÖCKEN
MÉTHODE ET KIT POUR LA PRODUCTION DE BLOCS CELLULAIRES

(30) Priority: 22.06.2020 IT 202000014863
(43) Date of publication of application: 29.12.2021
(73) Proprietor: Hospitex International S.r.l., 50019 Sesto Fiorentino (FI) (IT)
(72) Inventor: Puliti, Francesco, 50041 Calenzano (Firenze) (IT); Barbetti, Alfredofranco, 50019 Sesto Fiorentino (Firenze) (IT)
(74) Representative: Soldatini, Andrea

(56) References cited:
- WO-A1-2016/146616
- WO-A1-2020/110404
- CN-A- 110 079 517
- JP-A- 2004 201 638
- US-A- 5 213 845
- US-A1- 2019 390 162

## Description

### Field of the Invention

The present invention relates in general to the field of diagnostic analyses, and more precisely it relates to a kit for the preparation of paraffin blocks starting from cytological samples collected by traditional methods or in liquid phase, technically called "cellblocks" useful for diagnostic analyses, to a related method comprising a step of using such kit, and to a cellblock so prepared.

### State of the Art

In the field of histology, or of the diagnostic analyses on tissue samples/biopsies, the very first step following the removal of the tissue to be analysed is the preparation of the sample after its fixation and inclusion in paraffin. These are critical steps for an appropriate preparation of the sample and the subsequent reading under the microscope, and therefore ultimately for a correct diagnosis.

By *fixation* is meant the treatment of the tissue sample/biopsy with chemical and/or physical procedures capable of preserving the tissue and cell morphology. This prevents those phenomena of autolysis and degradation that would make it impossible the correct interpretation of the sample taken, and also prevents its decomposition in order to carry out checks and analyses even after some time. The sample must also be processed and treated so that it can be examined under the microscope in the form of very thin slices. To do this, however, allowing the sample to maintain its structure and consistency and to remain unchanged for a long time even in the form of very thin slices; the sample is subjected to an inclusion step inside a more resistant material. Then it is cut using an instrument called microtome, capable of making precise cuts of the material, obtaining sections with a thickness of the order of a few micrometres. Furthermore, to make the characteristics to be examined more distinguishable, the samples are stained to make the cells, or their different parts to be analysed, immediately visible and distinguishable under the microscope.

The traditional histologic method for preparing a sample according to the general scheme of steps illustrated above includes the sample fixation with formalin or another fixative solution, the dehydration in alcoholic solutions and the diaphanisation in xylene or other clarifying solutions and the inclusion in liquid hot paraffin. Upon cooling, the paraffin allows obtaining the classical "histologic block", a block of material sufficiently hard and homogeneous to be then cut with the microtome. Cutting this kind of sample embedded in paraffin requires that the operator cuts away first the excess of paraffin not containing cells to be analysed, then the sections in paraffin containing cells are cut and placed on a slide for the subsequent colouring and analysis under microscope.

In a similar way to the traditional histological method, it is possible to treat the traditional or liquid-phase cytologic samples as if they were histological using dedicated solutions or kits. These solutions provide for the incorporation of the cytologic samples into solid or semi-solid matrices with the aim of uniting the single dispersed or suspended cells of the cytological samples within a single solid or semi-solid body with the purpose to simulate a histological tissue. In this way, it is possible to manage these cytologic samples as if they were histological. Once the cytologic samples are embedded in this kind of matrices, they are dehydrated, diaphanised and included in paraffin according to the traditional histological techniques. The final product of this type, embedded in paraffin, is called cellblock. These methods, called cytoinclusion techniques, can be applied to small tissue histologic fragments, such as small biopsies.

Different types of matrices are known for embedding cells in the cytoinclusion techniques, for instance gel matrices based on agar-agar or gelatine, or the matrices based on the coagulation of plasma from human blood with the enzyme thrombin around the cellular sample.

These latter matrices are no more in use however because the current law prohibits the use of plasma-based products for these uses, while agar-agar matrices have a number of drawbacks in practice. For their preparation, a microwave oven or a thermostatic bath must be available in laboratory for melting the material, which will remain in the molten state suitable for incorporating the cells only for a very limited time. Therefore, this type of matrix can only be used to prepare a few samples at once, with consequent lengthening of the times. Definitely more advantageous in terms of ease of use, flexibility according to the number of samples, and also in terms of speed of preparation is the alginate gel, already described for instance by Lim F. et al. in Science, 1980, (210):908-910, as means for embedding cells before inclusion in paraffin.

This technique of preparation of cellblocks presents several technical problems, first the fact that the elimination of paraffin in excess is a very delicate operation to be done with the naked eye on such small thickness. It is also extremely easy for the cutting operator to cut away parts of the cell-containing material in a wrong operation called *overcutting.*

On the contrary, it is just as easy for the operator to incur in an *undercutting* of the material so that the sections cut, to be analysed, in the end do not contain cells, or in any case do not contain a sufficient amount of cells for a meaningful reading under the microscope.

The issue of *overcutting* the material is particularly felt when the cells of the sample to be analysed have been embedded in paraffin in an ordered way, i.e. in a planar, homogeneous layer in the matrix. In this case, with the cells all placed on a single plane, the risk of losing cells by making a too deep cut for eliminating the excess of paraffin, is very high. This issue is even more acute if the sample contains few cells.

This risk of human error in cutting with a microtome is mitigated in the techniques that allow the cells to be incorporated into the matrix in a disordered way and on several planes. In fact, in such matrices it is possible to find cells at different depths, so that sections with cells can be obtained practically throughout the thickness of the cellblock. In these cases, especially if the sample is poor in cells, their dispersion on several levels can however cause the cut sections to have an insufficient number of cells to be analysed and it is necessary to prepare more slides with many sections.

To overcome these technical problems, some alternative methodologies for preparing the cellblock have been proposed, such as the so-called AV marker similar to a beacon. This is a sort of marker that is placed on the plane where the cells are arranged inside the matrix to indicate precisely their location as a guide for the operator in charge of cutting the material (see Varsegi G.M. et al., J. Vis. Exp. 2009, (29):1316). The marker, that is per se difficult to be placed, has moreover a limited efficacy in advising of the presence of cells because it does not provide a measure of the actual thickness of the cells planar layer, therefore the risk is still there of cutting away the cells in the elimination of paraffin in excess. This technique, too laborious, complicated and having an insufficient effectiveness, has therefore not found any commercial success.

Given the utility of the cyto-histological samples in the diagnostic medicine, in particular for the diagnosis of tumours, whose need in large numbers and health benefits is well established, it is still strongly felt in the field the need easier and more efficacious techniques and devices for use in the preparation of cellblocks embedding the sample to be analysed. Particularly felt is the need that such new devices and preparation methods are efficacious also starting from fluid samples and with relatively few cells available for analysis.

### Summary of the Invention

In a first aspect the present invention relates to a kit for the preparation of a cellblock starting from a cytologic sample previously taken from a subject and preserved in liquid phase or previously subjected to fixation. This kit solves the problems highlighted above for the known devices, thanks to the use of two matrices of different colours for incorporating the cells of the sample under analysis, and has the characteristics described in details in the following.

In particular, the kit of this invention makes easy for an operator in charge of cutting cellblocks the preparation of slides for analysis, creating in the cellblock a clear demarcation between the part without cells, to be cut away, and the part including the cells to be analysed. The risks of human error in the cutting operations by using a microtome that may have serious consequences, in particular for samples with a scarce number of cells having diagnostic relevance, are thus reduced.

At the same time, the kit of this invention is easy to use, and makes easier and faster the steps of preparation of the cytologic paraffin block with respect to the known methods, used until today.

It is thus subject of the invention a kit for the preparation of a cellblock of a cytologic sample, whose essential characteristics are defined in the first of the annexed claims.

A further subject of the invention is a method for the preparation of a cellblock that comprises a step of using the above said kit, whose essential characteristics are defined by the related independent claims attached here.

Still a further subject of the invention is a cellblock made with the above said kit, and its use, whose essential characteristics are defined in the related independent claim attached here.

Further important characteristics of the kit and of the method for preparing a cellblock, of the cellblock, and of the use thereof for diagnostic analyses according to the invention are reported in the following detailed description, and are defined in the dependent claims attached here.

### Detailed Description of the Invention

In the present invention, by the term "cellblock" is meant a solid or semi-solid matrix that includes a cytologic sample, embedded in its turn in paraffin, and that can be suitably sectioned into thin sections, coloured and observed under microscopy as they were histologic sections of a tissue.

By the term "cytologic sample" is meant herein a sample of cellular material having a diagnostic meaning, previously taken from a subject who needs a diagnosis and collected inside a container, containing or not a cytological liquid preservative. Typically, the cytologic samples differ from the histologic samples for the cells that, instead of being in contact among each other inside tissue structures, are dispersed and without special orientation according to specific structures or superstructures, as they are in the histologic samples. Non-limiting examples of cellular materials for the cytologic samples according to the invention can be fine needle aspiration samples, such as fine needle aspiration samples from the breast, thyroid or lymph nodes, or gynaecological samples, such as cervico-vaginal samples or washing liquid samples, ascitic and peritoneal fluids, etc.

Subject of this invention is a kit for the preparation of a cellblock from a cytological sample, comprising:
a) an aqueous solution of a gellable alginate salt comprising a first colouring agent having a first colour, suitable for forming a gel matrix wherein said cytological sample is embedded;
b) an aqueous solution of a gellable alginate salt comprising a second colouring agent having a second colour different from said first colour of the first colouring agent, suitable for forming a gel layer coating said matrix;
c) an aqueous solution of a gelling agent for said solutions of alginate salt.

In the kit of the invention the three distinct solutions a), b) and c) can be advantageously maintained separated inside three distinct containers, or at least two, or all three, solutions can be contained in separated parts of a same container.

In a particular embodiment, the present kit can further comprise one or more tubes for forming gels, and/or one or more disposable spatulas for shaking the solutions so as to form a matrix and a coating that are homogeneous, and/or Pasteur pipettes or equivalent devices suitable for pouring the solutions.

According to a preferred embodiment of the invention, the solutions a) and/or b) further comprise a preservative for guaranteeing the chemical stability, such as formaldehyde.

Optimal results in terms of gelification of the alginate and formation of the matrix to incorporate cells have been observed when sodium alginate was used as alginate salt and calcium chloride was used as gelling agent. However, any other water-soluble alginate salt and gelling agent that form a gel matrix incorporating the cells sample are within the scope of this invention.

As regards to the colouring agents of the solutions a) and b) they are required to be different between each other so as to create that demarcation between parts of the cellblock useful for the operator to make a precise cut of the sections, without losing cellular material having diagnostic relevance. Furthermore, advantageously, the colouring agents can be selected from those resistant to the dehydrating and diaphanising treatments, subsequent to the formation of the matrix and of the coloured coating, such as some of the colouring agents belonging to the class of triphenylmethane or of azoic dyes. Preferably, the first colouring agent is Ponceau red, of red colour, and the second is Alphazurine FG of blue colour. The choice of different, contrasting colours creates a clear demarcation between the portion of the gel that does not contain cells, that portion which forms the coating layer of the second colour, and the portion of gel that incorporates the cells and has a first, distinctly different colour.

A cellblock prepared with the kit of this invention allows therefore an operator in charge of cutting the cellblock to identify clearly when the cellular material is close because of the appearance of the second colour. At that point, in order to find exactly the plane on which the first cells are, it is sufficient to slice off the layer of the second colour that is the boundary where is the start of the sample included in the matrix having the first colour. With respect to other known systems of marking, the double coloured gel matrix according to this invention has the advantage of being easier and faster to be prepared and at the same time it is more efficacious as a marker because the thickness of the coating of second colour corresponds to a portion without cellular material.

Subject of the invention is moreover a method for the preparation of a cellblock containing a cytologic sample, comprising a step of using the kit as defined above, for the incorporation of the sample previously taken from a subject in a gel matrix of alginate of a first colour coated by a layer of alginate gel of a second colour. Following the incorporation of a cytologic sample in the coated matrix, the method of this invention further comprises the following steps:
i) dehydrating the coated matrix embedding the cytologic sample;
ii) diaphanising the dehydrated coated matrix;
iii) infiltrating the coated matrix, dehydrated and diaphanized, with hot liquid paraffin, and obtaining said cell block by cooling down to room temperature.

The embedding of the cytologic sample inside the alginate gel matrix is preferably carried out by the following steps of:
i') suspending the cytologic sample in the solution a) containing alginate and first colouring agent, in a suitable container;
ii') adding of the solution c) containing the gelling agent for alginate until a gel matrix of alginate of said first colour is formed by gelation, which embeds the cells of the cytologic sample;
iii') eliminating the solution c) in excess and adding of the solution b) to said gel matrix until uniformly coating it with a layer having the second colour.

Typically, but without limitation, the step i') of suspending the cytologic sample in the solution a) is carried out by using as container a conical bottom centrifuge tube.

The alginate gel matrix and the coating thereof are typically formed at room temperature.

The formation of a cells suspension while alginate gelifies as described above causes the cells in the cellblock of the present invention to be dispersed irregularly in the matrix. Accordingly, cells having diagnostic relevance can be present in all sections corresponding to the matrix, also for cytologic samples with a few cells of that type, thus reducing the risk of not finding cells if the operator has made a too deep cut using the microtome. The operator can discretionary choose for a final cellblock with the cells mostly placed on a cutting plane by centrifuging the cytologic sample suspension in the solution a) once the solution c) is added.

The steps from i) to iii) of the method of this invention can be carried out according to the operative conditions of the known methods, for instance the dehydration step can be carried out by treatment with alcohols, and the diaphanising step by treatment with xylene.

Typically, the starting cytologic sample is a sample in liquid phase, collected in a container with a cytologic liquid preservative. The present method of embedding the sample in the alginate gel matrix, in this case, is carried out by first centrifuging the sample and then eliminating the supernatant so as to obtain a cellular concentrate on which the solutions are then dispersed.

Subject of this invention is moreover a paraffin block made with the kit described above, and its use for preparing slides for morphological evaluations with microscope and for immune-cyto-histochemical analysis. The present cellblock comprises the cytologic sample embedded in an alginate gel matrix having a first colour, coated by a layer of alginate gel having a second colour different from the first one, embedded on its turn in paraffin.

The cellblock of the invention can be used for preparing slides by cutting thin sections with suitable instruments, for instance with a laboratory microtome, which allows obtaining layers of few micrometres for backlit observation under microscope once they are placed on the special transparent slides and coloured in order to highlight the cells in a phase known as *staining.*

This subsequent colouring of the cells, which may vary depending on the kind of evaluation to make, has the aim of improving observation under microscope. The Applicant has verified that the colouring of the alginate matrix where the cells are embedded does not interfere with such subsequent colouring. On the sections of the present cellblock, morphological analyses of the cellular sample can be carried out, but also immune-cyto-histochemical evaluations and any other kind of diagnostic medical evaluations of the sections obtained from cellblocks.

The kit and the method of this invention, thanks to the innovative system of demarcation of the portions without cells from the portions containing cells in the cellblock, allows reducing if not eliminating the risk of human error in cutting the cellblock for eliminating the paraffin in excess. Together with the disorderly embedding of the cells in the matrix, this allows obtaining a much higher number of sections containing cells, thus useful for the analyses, from a same cellblock.

These can be identified in general as the main technical advantages of the present invention, and they became important positive features for the efficacious use of cytologic samples with few cells having diagnostic relevance too. It is evident that in these cases the consequences of miscutting the cellblock are more severe because it is more likely that the cells are not found, so that the sample is useless and a fresh sample has to be taken from the subject.

The kit and method of this invention can be used, at the operator's discretion, also for the preparation of cellblocks wherein the cells are placed in a more regular way on a cutting plane in the gel matrix by centrifuging the container where the sample was mixed solution a) and solution c). It is worth noting that in this case a particular care must be paid in the cutting phase with the microtome, in order to avoid *overcutting.*

A further advantage of this invention is represented by the ease and speed for embedding the cells in a matrix. In fact, the whole procedure for embedding the cytologic sample inside the alginate matrix is carried out at room temperature. In addition, this is feasible also without having available a microwave oven or a thermostatic bath in the laboratory, or any other equipment for forming the matrix and embedding the cells. Therefore, the present kit is suitable for use also in laboratories that are not highly equipped, such as those in developing countries.

Moreover, thanks to the kit of this invention, it is possible to prepare in series any large number of matrices embedding cell samples, so as to make the fixation and stabilize them while waiting to prepare the respective cellblocks, as part of the same preparation operation, as per laboratory best practice.

Further non-secondary advantages of the present invention are moreover the use of not dangerous reagents only, free of any relevant chemical and biological risk, and the use of room temperature conditions in all phases of preparation of the cellblock. Last, but not less important advantage of this invention is the possibility to obtain cellblock and sections thereof having great stability and long duration, of the order of years, without alterations and modifications, thus guaranteeing the reproducibility of observations even after a long time.

The present invention is therefore an optimal solution from all points of view, and it allows overcoming the problems highlighted above when describing the state of the art.

The following non-limiting examples are provided in order to illustrate the present invention.

### EXAMPLE 1

A kit of the invention was used for preparing a cellblock with the following solutions.

Solution a) An aqueous solution was prepared that was 0.5% by weight with respect to the total volume of the sodium alginate solution by dissolving 5 g of alginic acid, sodium salt (CAS No. 9005-38-3) in 1000 ml of deionized water. This solution was then added with 2 ml of a solution of a red colouring agent called Ponceau Red and 2.45 ml of an aqueous solution 37% of formaldehyde (CAS No. 50-00-0).

Solution b) It was prepared similarly to the solution a) but by using a different colouring agent, such as Alphazurine FG (CAS No. 3844-45-9).

Solution c) A calcium chloride aqueous solution was prepared, which was 30% by weight with respect to the total volume of the solution, by dissolving 300 g of calcium chloride (CAS No. 10043-52-4) in 1000 ml of deionized water.

A thyroid cytologic sample taken by fine needle aspiration and fixed in formalin was subjected to centrifugation in a 50 ml Falcon-type conical-bottom tube for 10 minutes at approximately 800 RCF.

Once the centrifugation was finished the supernatant was eliminated, then on the cellular pellet at the bottom of the tube the solution a) was poured in a slightly higher volume than the pellet's volume. Then, by using a disposable spatula, the pellet was suspended in the solution a). To the so formed suspension, the solution c) was added with a Pasteur pipette, in a delicate way and maintaining the tube in a slightly inclined position. After approximately 5 minutes, the complete gelification of alginate was obtained and the gel matrix with the cells embedded therein was transferred from the tube into a histology or biopsy cassette, eliminating the solution c) in excess.

By using a special Pasteur pipette, few drops of the blue-coloured solution b) were poured above and around the red gel matrix with the cells embedded, so as to form a blue layer of demarcation between the paraffin and where the red matrix containing cells starts. The gelification of solution b) on the red matrix occurred by using the residual solution c), remained on the surface of the red matrix. Then the steps of dehydration in alcohol, diaphanization in xylene and inclusion in paraffin have been carried out, according to the standard histologic protocols.

## Claims

1. A kit for the preparation of a cellblock from a cytological sample, comprising:
a) an aqueous solution of a gellable alginate salt comprising a first colouring agent having a first colour, suitable for forming a gel matrix wherein said cytological sample is embedded;
b) an aqueous solution of a gellable alginate salt comprising a second colouring agent having a second colour different from said first colour of the first colouring agent, suitable for forming a gel layer coating said matrix;
c) an aqueous solution of a gelling agent for said solutions of alginate salt,
wherein said first colouring agent and said second colouring agent are colouring agents belonging to the class of triphenylmethane or of azoic dyes.

2. The kit of claim 1, wherein said alginate salt is sodium alginate and said gelling agent is calcium chloride.

3. The kit of claim 1 or 2, wherein said first colouring agent is Ponceau Red and said first colour is red.

4. The kit of any one of the preceding claims, wherein said second colouring agent is Alphazurine FG and said second colour is blue.

5. The kit of any one of the preceding claims, wherein said solutions a) and b) further comprise a preservative, such as formalin.

6. A method for the preparation of cell block from a cytologic sample, comprising a step of using the kit as defined in claims 1-5, for embedding said cytologic sample previously taken from a subject in an alginate gel matrix having a first colour coated by a gel layer of alginate having a second colour different from said first colour, said method further comprising the following steps of:
i) dehydrating said coated matrix embedding the cytologic sample;
ii) diaphanising said dehydrated coated matrix;
iii) infiltrating said coated matrix, dehydrated and diaphanized, with hot liquid paraffin, and obtaining said cell block by cooling down to room temperature.

7. The method of claim 6, wherein said embedding of the cytologic sample comprises the following steps of:
i') suspending said cytologic sample in said solution a) in a suitable container;
ii') adding said solution c) until a gel matrix of alginate of said first colour is formed by gelation, which embeds the cells of said cytologic sample;
iii') eliminating said solution c) in excess and adding said solution b) to said gel matrix until uniformly coating it with a layer having said second colour.

8. The method of any one of claims 6 or 7, wherein all steps are carried out at room temperature.

9. A cell block of a cytologic sample obtained by the method of claims 6-8 prepared by the kit as defined in claims 1-5, comprising said cytologic sample embedded in a matrix of alginate gel having said first colour, coated by a layer of gel alginate having said second colour different from the first colour, said matrix being embedded in paraffin.

10. Use of a cell block as defined in claim 9, for the preparation of slides for morphological evaluations with microscope and for immune-cyto-histochemical analysis.

## Patentansprüche

1. Kit für die Herstellung eines Zellblocks aus einer zytologischen Probe, umfassend:
a) eine wässrige Lösung eines gelierbaren Alginatsalzes, umfassend einen ersten Farbstoff, der eine erste Farbe aufweist und zum Ausbilden einer Gelmatrix geeignet ist, in die die zytologische Probe eingebettet ist;
b) eine wässrige Lösung eines gelierbaren Alginatsalzes, umfassend einen zweiten Farbstoff, der eine zweite Farbe aufweist, die sich von der ersten Farbe des ersten Farbstoffs unterscheidet und zum Ausbilden einer Gelschicht geeignet ist, die die Matrix überzieht;
c) eine wässrige Lösung eines Geliermittels für die Lösungen von Alginatsalz,
wobei der erste Farbstoff und der zweite Farbstoff Farbstoffe sind, die zu der Klasse von Triphenylmethan oder von Azofärbemitteln gehören.

2. Kit nach Anspruch 1, wobei das Alginatsalz Natriumalginat und das Geliermittel Calciumchlorid ist.

3. Kit nach Anspruch 1 oder 2, wobei der erste Farbstoff Ponceau-Rot ist und die erste Farbe Rot ist.

4. Kit nach einem der vorstehenden Ansprüche, wobei der zweite Farbstoff Alphazurine FG ist und die zweite Farbe Blau ist.

5. Kit nach einem der vorstehenden Ansprüche, wobei die Lösungen a) und b) ferner ein Konservierungsmittel wie Formalin umfassen.

6. Verfahren für die Herstellung eines Zellblocks aus einer zytologischen Probe, umfassend einen Schritt der Verwendung des Kits wie in den Ansprüchen 1 bis 5 definiert zum Einbetten der zytologischen Probe, die zuvor von einem Subjekt entnommenen wird, in eine Alginatgelmatrix, die eine erste Farbe aufweist, die durch eine Gelschicht aus Alginat überzogen ist, die eine zweite Farbe aufweist, die sich von der ersten Farbe unterscheidet, das Verfahren ferner umfassend die folgenden Schritte:
i) Dehydratisieren der überzogenen Matrix, in die die zytologische Probe eingebettet ist;
ii) Diaphanisieren der dehydratisierten überzogenen Matrix;
iii) Infiltrieren der überzogenen Matrix, die dehydratisiert und diaphanisiert ist, mit heißem flüssigem Paraffin und Erhalten des Zellblocks durch ein Abkühlen auf Raumtem peratur.

7. Verfahren nach Anspruch 6, wobei das Einbetten der zytologischen Probe die folgenden Schritte umfasst:
i') Suspendieren der zytologischen Probe in der Lösung a) in einem geeigneten Behälter;
ii') Hinzufügen der Lösung c), bis durch eine Gelierung eine Gelmatrix von Alginat der ersten Farbe ausgebildet ist, die die Zellen der zytologischen Probe einbettet;
iii') Entfernen des Überschusses der Lösung c) und Hinzufügen der Lösung b) zu der Gelmatrix, bis diese gleichmäßig mit einer Schicht überzogen ist, die die zweite Farbe aufweist.

8. Verfahren nach einem der Ansprüche 6 oder 7, wobei alle Schritte bei Raumtemperatur ausgeführt werden.

9. Zellblock einer zytologischen Probe, erhalten durch das Verfahren der Ansprüche 6 bis 8, hergestellt durch das Kit wie in den Ansprüchen 1 bis 5 definiert, umfassend die zytologische Probe, die in eine Matrix von Alginatgel eingebettet ist, die die erste Farbe aufweist, überzogen mit einer Schicht von Gelalginat, die die zweite Farbe aufweist, die sich von der ersten Farbe unterscheidet, wobei die Matrix in Paraffin eingebettet ist.

10. Verwendung eines Zellblocks wie in Anspruch 9 definiert für die Herstellung von Objektträgern für morphologische Untersuchungen mit dem Mikroskop und für immunzytohistochemische Analyse.

## Revendications

1. Kit pour la préparation d'un bloc cellulaire à partir d'un échantillon cytologique, comprenant :
a) une solution aqueuse d'un sel d'alginate gélifiable comprenant un premier agent colorant ayant une première couleur, apte à former une matrice de gel dans laquelle ledit échantillon cytologique est incorporé ;
b) une solution aqueuse d'un sel d'alginate gélifiable comprenant un second agent colorant ayant une seconde couleur différente de ladite première couleur du premier agent colorant, apte à former une couche de gel revêtant ladite matrice ;
c) une solution aqueuse d'un agent gélifiant pour lesdites solutions de sel d'alginate,
dans lequel ledit premier agent colorant et ledit second agent colorant sont des agents colorants appartenant à la classe des triphénylméthanes ou des colorants azoïques insolubles.

2. Kit selon la revendication 1, dans lequel ledit sel d'alginate est de l'alginate de sodium et ledit agent gélifiant est du chlorure de calcium.

3. Kit selon la revendication 1 ou 2, dans lequel ledit premier agent colorant est le rouge ponceau et ladite première couleur est le rouge.

4. Kit selon l'une quelconque des revendications précédentes, dans lequel ledit second agent colorant est l'alphazurine FG et ladite seconde couleur est le bleu.

5. Kit selon l'une quelconque des revendications précédentes, dans lequel lesdites solutions a) et b) comprennent en outre un conservateur, tel que de la formaline.

6. Procédé de préparation d'un bloc cellulaire à partir d'un échantillon cytologique, comprenant une étape consistant à utiliser le kit tel que défini dans les revendications 1 à 5, pour l'incorporation dudit échantillon cytologique préalablement prélevé sur un sujet dans une matrice de gel d'alginate ayant une première couleur revêtue d'une couche de gel d'alginate ayant une seconde couleur différente de ladite première couleur, ledit procédé comprenant en outre les étapes suivantes consistant à :
i) déshydrater ladite matrice revêtue incorporant l'échantillon cytologique ;
ii) diaphaniser ladite matrice revêtue déshydratée ;
iii) infiltrer ladite matrice revêtue, déshydratée et diaphanisée, avec de la paraffine liquide chaude, et obtenir ledit bloc cellulaire par refroidissement à température ambiante.

7. Procédé selon la revendication 6, dans lequel ladite incorporation de l'échantillon cytologique comprend les étapes suivantes consistant à :
i') suspendre ledit échantillon cytologique dans ladite solution a) dans un récipient approprié ;
ii') ajouter ladite solution c) jusqu'à ce qu'une matrice de gel d'alginate de ladite première couleur soit formée par gélification, qui incorpore les cellules dudit échantillon cytologique ;
iii') éliminer ladite solution c) en excès et ajouter ladite solution b) à ladite matrice de gel jusqu'à la revêtir uniformément d'une couche ayant ladite seconde couleur.

8. Procédé selon l'une quelconque des quelconque des revendications 6 ou 7, dans lequel toutes les étapes sont effectuées à température ambiante.

9. Bloc cellulaire d'un échantillon cytologique obtenu par le procédé selon les revendications 6 à 8 préparé par le kit tel que défini dans les revendications 1 à 5, comprenant ledit échantillon cytologique incorporé dans une matrice de gel d'alginate ayant ladite première couleur, revêtue d'une couche de gel d'alginate ayant ladite seconde couleur différente de la première couleur, ladite matrice étant incorporée dans de la paraffine.

10. Utilisation d'un bloc cellulaire tel que défini dans la revendication 9, pour la préparation de lames en vue d'évaluations morphologiques au microscope et d'analyses immuno-cyto-histochimiques.
